# EUROPEAN PATENT APPLICATION

(11) **EP 2 975 006 A1**
(43) Date of publication of application: **20.01.2016**
(21) Application number: 14176864.8
(22) Date of filing: 14.07.2014
(51) Int. Cl.: C03B 37/05, F16F 15/16

(54) **A centrifugal fiberising spinner unit and a method of automatically balancing such unit**

(71) Applicant: Rockwool International A/S, 2640 Hedehusene (DK)
(72) Inventor: Sørensen, Jens Jørren, 2770 Kastrup (DK); Pedersen, Martin, 4700 Næstved (DK)
(74) Representative: Høiberg A/S

(57) **Abstract**

The present invention concerns a centrifugal fiberising spinner unit comprising a housing an axle rotatably mounted in the housing by at least two bearings axially spaced apart, drive means for rotating the axle, a rotor assembly mounted on said axle, and provided with a fiberising spinning peripheral surface, wherein a balancing unit is provided on the axle, and wherein the balancing unit comprises a rotary container unit having a plurality of chambers around the axis of rotation and a fluid distribution unit adapted for introduction of a balancing fluid substance into one or more of the chambers.

## Description

The present invention relates to a centrifugal fiberising unit and a method for automatically balancing such unit.

Mineral wool fibres for insulation products are produced by centrifugal spinners comprising one or more rotors that rotate fast and thereby form fibres from the mineral melt which is discharged onto the one or more spinners. The mineral melt can be a stone, rock or slag melt or a glass melt.

Each rotor is arranged on a shaft in a housing and supported by bearings in the driving end and the non-driving end of the shaft. At the non-driving end, the rotor is arranged in an overhung configuration. In a spinner unit a plurality of rotors may be provided which are connected to a common drive source. Examples of spinner units are known from e.g. WO 02/32821 and WO 96/36573.

A major problem associated with the spinner unit and with the rotors is that it is desirable to rotate the rotors at high speed, but since the rotor is subjected to eccentric forces due to the melt being poured or thrown onto the rotor, this creates an unbalance in the spinner. The rotation speed may be above 10,000 rpm and the rotating mass of the spinner unit is typically approx. 75 kg or more so the eccentric forces may be quick severe due to the rotating mass and the high speed. This also subjects the rotor to variable wear, which may then worsen the unbalance due to the eccentric forces. This unbalance in turn wears out the bearings and necessitates the replacement of the spinner when the wear is too high. Another problem is that the melt is at a very high temperature, such as up to approx. 1600°C, when it is subjected to the rotor. The rotor is rotated at high speed whereby the melt is converted into a cloud of fibres formed off the rotor. It is well known that the fibres formed become thinner the faster the rotor is spun, which for some applications of the fibres is advantageous. However, the faster the spinner, i.e. the rotor and the drive shaft is spun, the more articulate any unbalance becomes and thereby shortens the service life of the spinner unit. In practise, the spinner unit is taken out of production for service and maintenance and to facilitate this, the rotor is mounted on a shaft so that it is easily replaceable.

In order to minimise the eccentric forces generated during use and causing wear it is suggested in WO 02/32821 to provide a spinner unit with an automatic balancing system, which is capable of automatically counter-balance any unbalancing occurring in the rotor assembly by shifting the position of the balls in a bearing.

However, in a centrifugal fiberising spinner unit for producing mineral wool fibres the mass rotating is quite high and the rotation speed extremely high so in practise this auto balancing unit suggested in prior art is very expensive. Further such a ball system must be tailor-made for the specific apparatus taking into account the working range of the apparatus in relation to rotational speed and magnitude of eccentric forces to balance. This also means that this type of balancing system is not very versatile, and the system may in some cases worsen the unbalance if the apparatus is utilized outside of the working range of the balancing system.

Therefore, it is an object to provide a centrifugal fiberising spinner unit with a system for balancing in order to reduce or eliminate the eccentric forces which the spinner is subjected to during use. There is furthermore a wish to produce thinner fibres which in turn requires the rotor to be spun at an even higher rotational speed which drastically increases the eccentric forces and the wear on the bearings. Following from this it is object to provide a balancing system on the spinner which enables higher rotation speeds without compromising the active service life of the spinner.

These objects are achieved by a centrifugal fiberising spinner unit comprising a housing, an axle rotatably mounted in the housing by at least two bearings axially spaced apart, drive means for rotating the axle, a rotor assembly mounted on said axle, and provided with a fiberising spinning peripheral surface, wherein a balancing unit is provided on the axle, and wherein the balancing unit comprises a rotary container unit having a plurality of chambers around the axis of rotation and a control flange unit adapted for introduction of a balancing fluid substance into one or more of the chambers. The balancing fluid substance may be in the form of liquid, particles, powder, balls or similar.

In a second aspect of the invention the objects are also achieved by a method of balancing a centrifugal fiberising spinner unit according to any of the preceding claims, comprising the steps of
- rotating a spinner unit which comprises an axle on which a rotor assembly is mounted on said axle, and provided with a fiberising spinning peripheral surface;
- detecting an unbalance and recording its angular position; and
- balancing the spinner unit by supplying fluid to at least one predetermined fluid camber with an angular position opposite the detected unbalance.

By a spinner unit with an automatic balancing system according to the invention there is achieved an automatic balancing unit reducing the effect of eccentric forces created in the rotor during production. This means that the wear on the bearings in the spinner is significantly reduced and consequently less maintenance costs and longer active service time for the spinner unit. The balancing unit according to the invention is an active automatic balancing system which is advantageous since it can perform the regulation against a rotational unbalance during use of the spinner unit.

In a preferred embodiment, the rotary container unit comprises a rotary container body with a plurality of chambers, such as four, and a rotary rear flange. Furthermore, the fluid distribution unit preferably comprises a rotary collector and a stationary front cover with a fluid injector per chamber, and so that each injector via the rotary collector is in fluid communication with its designated chamber. Hereby, an accurate and fast filling of small amounts of balancing fluid, which is preferably water, may be supplied in one or two chambers radially opposite of the detected unbalance so that a resulting centrifugal force counteracting the eccentric force caused by the unbalance is established. The chamber may have any suitable size for the given application, but should be big enough for the apparatus to run for prolonged time with the balancing system active, whereas the size is often limited by physical constraints in the apparatus or stress build-up in the chamber wall. In an embodiment, up to 128 ml of water may be accommodated in each chamber.

In order to achieve a reliable fluid supply from a stationary fluid supply and into the rotating system, the rotary collector preferably comprises concentric fluid slots arranged as ring-shaped openings at different radii, and so that fluid communication to each of the chambers is provided through one slot.

Preferably, the rear flange comprises two apertures in each of the chambers and wherein said apertures are provided for inlet and outlet of air and fluid. To ensure a fast filling of the chambers, said apertures are preferably provided at the innermost periphery of the chambers so that the fluid once it has entered into the chamber is centrifuged towards the outermost region of the chamber and thereby away from the inlet and outlet holes.

The apertures may have any suitable shape, but it is generally preferred that the apertures are round. Hereby the holes are easy to provide, e.g. by drilling, and further the stress build-up in the rear flange during use is kept at a minimum.

In the spinner unit, the axle comprises a drive end where the power is transferred from the drive means to the axle and a non-drive end where the rotor assembly is provided.

On the housing of the spinner unit at least one accelerometer is preferably provided for detection of radial displacements of the rotary container unit. The detection may preferably include a plurality of accelerometers at both the drive end and the non-drive end of the rotating axle, and which are detecting in two mutually orthogonal directions at the non-drive end and preferably also at the drive end of the axle. Hereby, the eccentric forces acting on the axle can be more accurately measured and thereby also more accurately compensated in the automatic balancing system.

In the spinner unit of the invention, a control unit is also provided for receiving detection signals, calculating and selectively supplying one or more chambers with balancing fluid.

By the invention, the step of balancing the spinner unit is preferably performed whilst the rotor assembly and the axle of the spinner unit is rotating at 8000-18000 rpm and during use.

In the following, the invention is described in more detail with reference to the accompanying drawings, in which:
- Fig. 1: is a schematic representation of an apparatus for producing webs of mineral wool fibres;
- fig. 2: is a perspective view of a spinner unit according to an embodiment of the invention;
- fig. 3: is a cross-sectional view of a spinner unit;
- fig. 4: is a detailed cross-sectional view of the non-drive end of the spinner unit according to an embodiment of the invention;
- fig. 5: is a perspective view of the balancing unit with a rotary container unit according to an embodiment of the invention;
- fig. 6: is a perspective exploded view of the balancing unit;
- fig. 6a: is a front view of a rotary container body of the embodiment in fig. 5 and 6;
- figs. 7-10: are front, cross-sectional, rear views and a detailed view of the fluid distribution disk of the balancing unit;
- fig. 11: is a detailed sectional view of the assembled balancing view showing the fluid communication passage therein;
- fig. 12: is another detailed sectional view showing the balancing fluid injector design of an embodiment of the invention; and
- fig. 13: is a diagram showing unbalance before and after the automatic balancing system is activated.

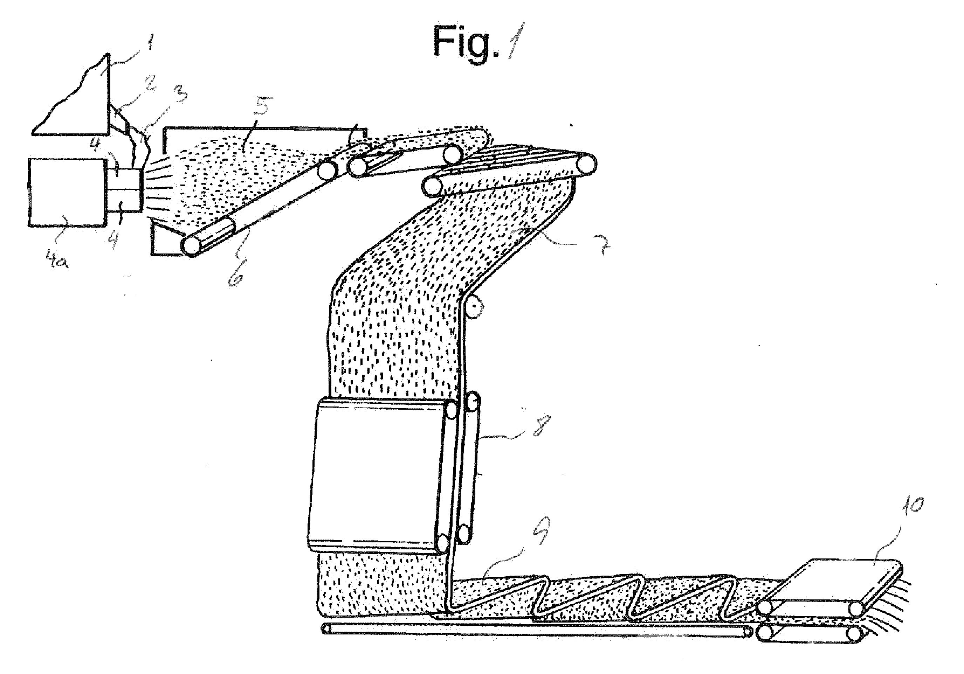

With reference to fig. 1, the production of mineral wool fibres and mineral wool insulation webs thereof comprises a furnace 1 with a melt outlet 2 along which a melt 3 of molten stone is poured onto a rotor in a spinner unit 4 which is arranged in a set of rotors in a spinner housing 4a. The melt 3 is thrown off the rotor 4 as fibres 5 either at the first rotor or one of the other rotors 4 in the arrangement. Binder is sprayed into the fibres and the fibres are then collected and carried forward on an inclined screen 6 and assembled to form a primary web 7, which is then forwarded through a pendulum conveyor arrangement 8 to form a secondary web 9. This web 9 is then forwarded for further processing, such as compression 10, etc.

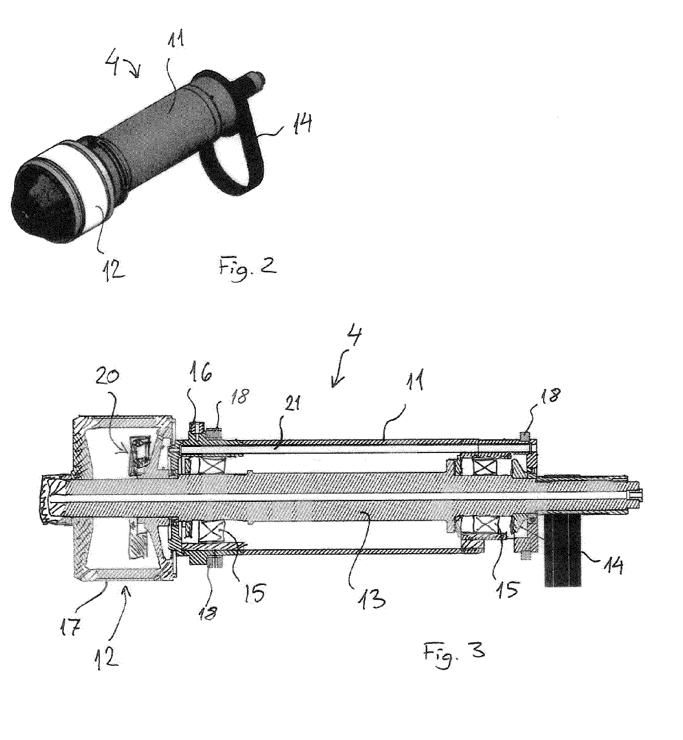

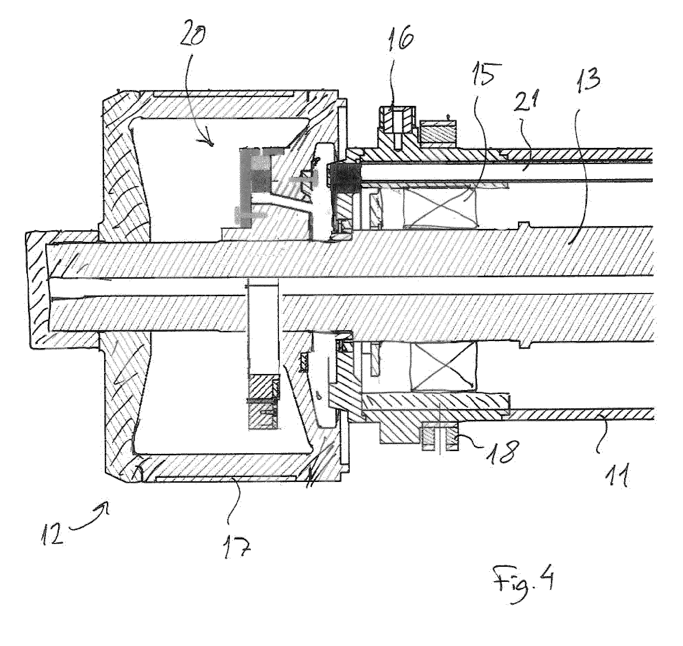

With reference to figures 2 and 3, each of the spinner units 4 comprise a housing 11 and an axle 13 with a rotor assembly 12 at the non-drive end and a connection, such as a belt 14, to a drive source at the other end (the drive end). The rotor assembly 12 is mounted on the axle 13 which is rotatably mounted in the housing 11 by two bearings 15. The rotor assembly 12 comprises an external surface portion 17 which receives the molten stone poured onto the rotating rotor 12 in order to produce mineral wool fibres. The external surface portion 17 is provided in the rotor assembly in such a manner that it is easily replaceable when it is worn by the molten stone. This wear also causes an unbalance in the rotor assembly. Another source of unbalance is the so-called freeze lining on the wheel (a layer of solidified melt on the wheel surface). The freeze lining may be uneven, e.g. because of uneven build-up or because of fragments of the lining breaking off. Further the wheel itself may be unbalanced. Often the wheel is made up of a number of parts, and even if the parts are manufactured to very low tolerances they may be unbalanced when assembled, To compensate for such an unbalance, an automatic balancing system 20 is provided in the rotor assembly. An accelerometer 16 is provided, and the accelerometer 16 may be provided both at the non-drive end as shown in the figures 3 and 4 but could also be provided at the drive end of the spinner unit 4. If accelerometers 16 are provided at both ends, it is possible to perform dynamic balancing by placing the balance plane closer to the unbalance, e.g. by having an extra chamber for balancing fluid at the drive end, or another position axially displaced from the position of the first balancing unit.

The spinner housing 11 is mounted on a frame (not shown) carrying a number of spinner units. Each spinner housing 11 is mounted at both the drive end and the non-drive end to the frame via dampers 18. This avoids vibrations due to an unbalance in one spinner unit to be transferred to other spinner units in the frame.

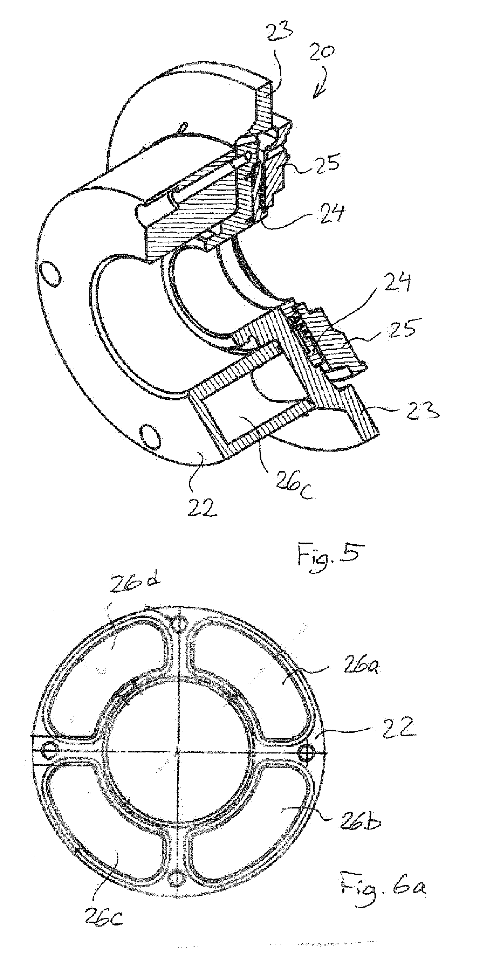

In figure 4 the balancing system 20 is shown mounted in the rotor assembly 12 at the non-drive end of the rotor axle and in figures 5 to 9 the automatic balancing system 20 and its components are shown in more detail.

The balancing unit 20 comprises a rotary container body 22 which is ring-shaped and provided with a number of fluid chambers 26. In the shown embodiment, four chambers 26a-26d are provided. The chambers 26a-d are formed with arcuate outer and inner walls and radial side walls and with smoothly rounded corners between the sides so that any critical build-up of stress in the radial walls between the chambers is prevented when the relatively high mass of the rotary container body 22 is spun at high speeds, such as up to 15,000 rpm or even more.

The ring-shaped container body 22 is concentrically mounted to a rotary cover flange 23, which is closing wall of the chambers 26 in the rotary container body 22. Sealing rings 26e are provided around each of the chambers 26a-d so that fluid tight chambers 26 are provided between the rotary container body 22 and the rotary cover flange 23. The cover flange 23 is provided with drain/inlet holes 27 for filling and emptying the fluid chambers 26. The position and number of the fluid communication holes 27 is such that there are two holes 27 per chamber 26 and the two holes are positioned at the radial innermost region of the chamber and angularly spaced as much apart as possible, i.e. at each of the side regions of each chamber 26. The holes 27 have a relatively large dimension in order to ensure a quick filling and drainage of the chambers 26.

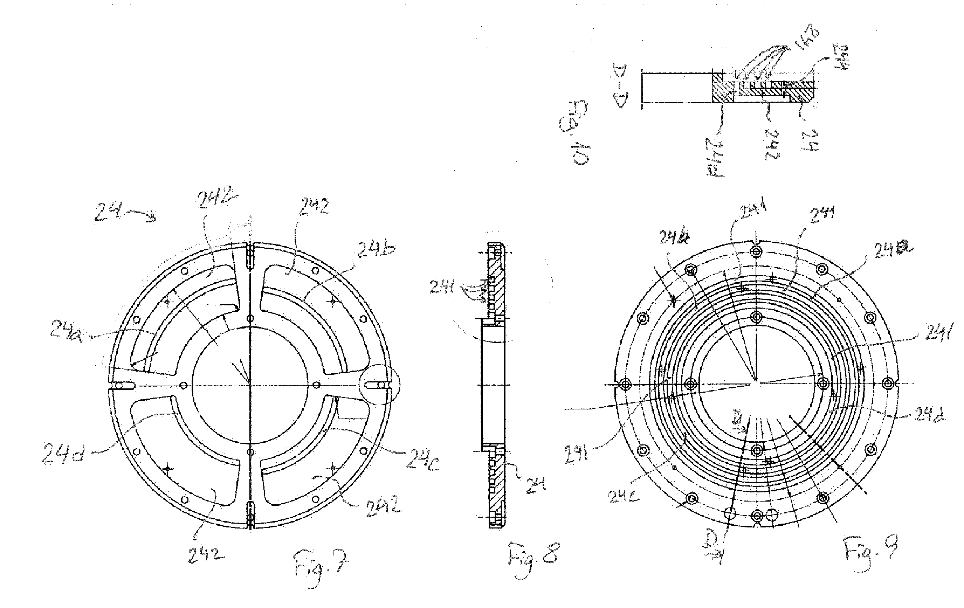

On the non-chamber side of the rotary cover flange 23, a rotary fluid collector 24 is concentrically fitted to the flange 23. The rotary collector 24 is shown in more detail in figures 7-10. The rotary collector 24 is provided four ring-shaped slots 24a-d serving as fluid inlets for the chambers 26 so that one slot 24a-d is assigned to each chamber 26.

The ring-shaped slots 24a-d are arranged at different radii. On the side facing away from the chambers 26, the collector 24 is provided with four concentric annular grooves 241, see for instance fig. 9. Each of the grooves 241 has a slot 24a-d associated to provide fluid communication from one side of the collector 24 to the other. On the other side of the collector, i.e. the side facing the chambers 26, an arcuate recess 242 is provided in association with each of the slots 24a-d. These recesses 242 have substantially the same shape as the chambers 26a-d. In fig. 10, the recess 242 is shown in a sectional detailed view D-D of fig. 9, where the innermost of the grooves 241 extends into the slot 24d to establish fluid communication with the recess side of the collector 24. In fig. 10 it is also apparent that at the radial outermost region of the recess an overflow passage 244 is provided.

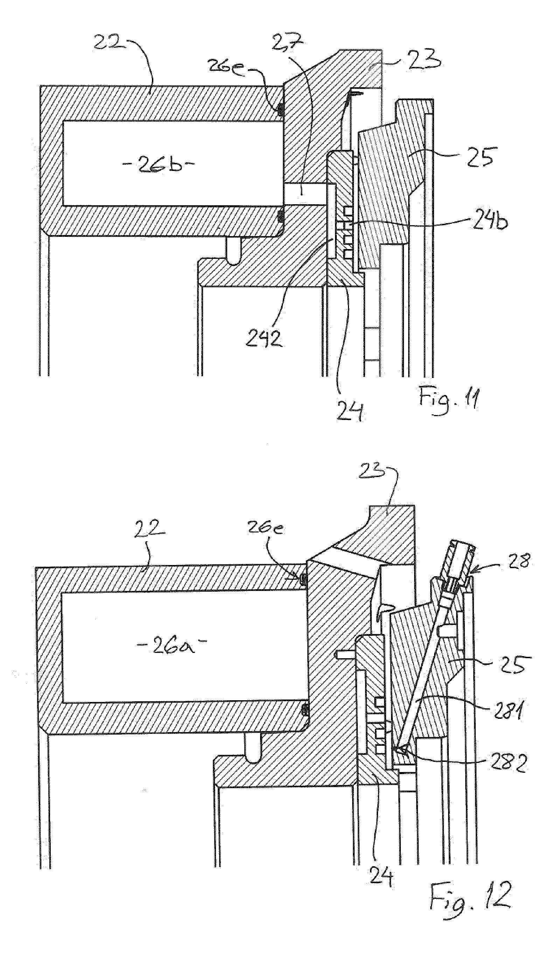

As shown in fig. 11, the fluid enters into the recess 242 through the slot 24b. The recess 242 is dimensioned such that fluid communication with the chamber 26b is established through the inlet and drainage holes 27 at the radially outermost region of the recess 242. Since the fluid is entered into the chamber while the system is rotated at high speed, the fluid is thrown outwards in the recess 242 and into the drainage/inlet hole 27 and into the chamber 26b. As also shown in fig. 11, the drainage and inlet hole 27 is provided with a radial position at the innermost radial region of the chambers 26. Hereby, the balancing fluid will be centrifuged outwards in the chamber and a more accurate amount of balancing fluid can be quickly supplied in order to balance the rotating system.

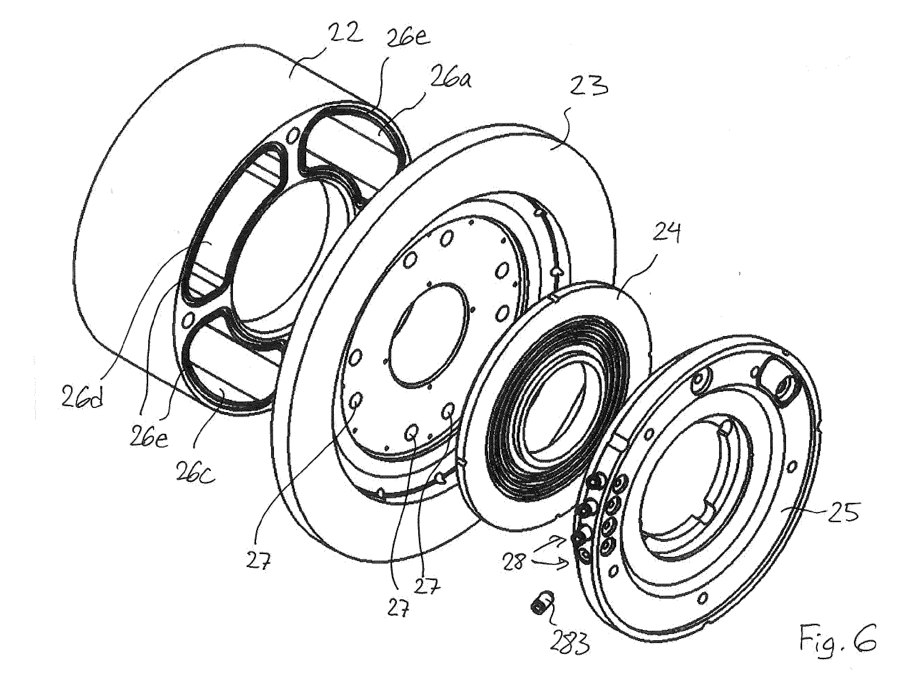

With reference to particularly figures 6 and 12, at the side of the collector 24 where the circular concentric grooves 241 are provided, there is a stationary cover ring 25 with four fluid injectors 28 for supplying balancing fluid to each of the four grooves 241 in the collector 24. The injectors 28 each include an inclined fluid channel 281 extending from the peripheral surface of the stationary cover ring 25 and into the cover ring 25. At the peripheral surface, each of the injectors is connected to a fluid supply 283 of water or other suitable balancing fluid. At a predetermined position, which is individual for each of the four injectors 28 there is provided an axially oriented injection bore 282, which has a predetermined radial position corresponding to a designated groove 241 in the collector 24 (see fig. 12). The fluid supply 283 for the injectors is individually controllable so that balancing fluid can be supplied to a specific chamber 26 during rotation.

When an unbalance is detected by the accelerometers 16, a signal is transmitted to a control unit which determines the angular position of the unbalance and how much balancing fluid there is needed in one or two designated chambers 26 to correct the unbalance. The determined amount of fluid is then fed through the fluid pipes and into the injector 28 assigned to the designated chamber 26.

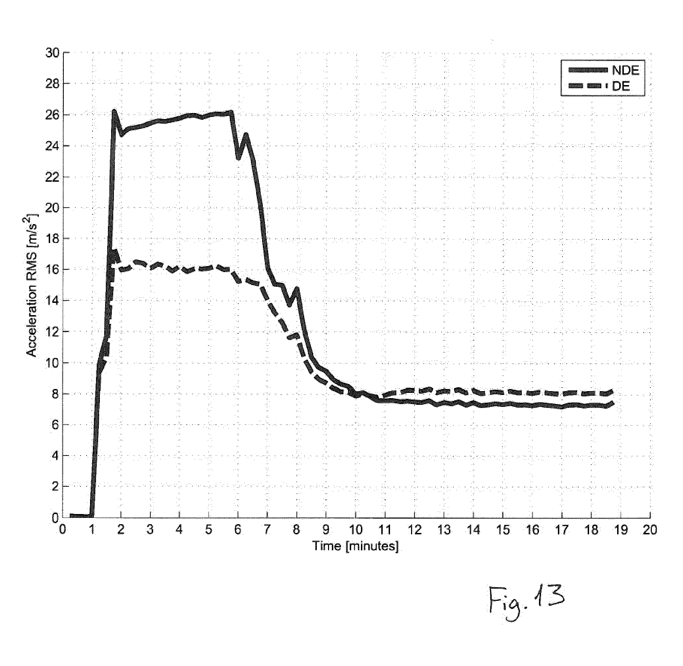

The automatic hydro-balancer proves in test to be successful in reducing any unbalance to less than 30% of the initially detected unbalance, as shown in fig. 13. As shown in the diagram in fig. 13, the non-drive end (NDE) of the spinner unit experiences the most severe unbalance issues. The spinner unit was tested at a rotor speed of 13593 rpm and an unbalance of approx. 26 m/s² was quickly measured. After 6 minutes the automatic balancing system was started and within approx. 4 minutes the automatic balancing system has reduced the RMS value from 26 to approx. 8 m/s², i.e. to approx. 30% of its original value.

## Claims

1. A centrifugal fiberising spinner unit comprising
a housing
an axle rotatably mounted in the housing by at least two bearings axially spaced apart, drive means for rotating the axle,
a rotor assembly mounted on said axle, and provided with a fiberising spinning peripheral surface, wherein
a balancing unit is provided on the axle,
**characterised in that**
the balancing unit comprises a rotary container unit having a plurality of chambers around the axis of rotation and a fluid distribution unit adapted for introduction of a balancing fluid substance into one or more of the chambers.

2. A centrifugal fiberising spinner unit according to claim 1, wherein the rotary container unit comprises a rotary container body with a plurality of chambers, such as four, and a rotary rear flange.

3. A centrifugal fiberising spinner unit according to claim 1 or 2, wherein the fluid distribution unit comprises a rotary collector and a stationary front cover with a fluid injector per chamber, and so that each injector via the rotary collector is in fluid communication with its designated chamber.

4. A centrifugal fiberising spinner unit according to claim 3, wherein the rotary collector comprises concentric fluid slots arranged as ring-shaped openings at different radii, and so that fluid communication to each of the chambers is provided through one slot.

5. A centrifugal fiberising spinner unit according to any of the preceding claims, wherein the rear flange comprises two apertures in each of the chambers.

6. A centrifugal fiberising spinner unit according to any of the preceding claims, wherein said apertures are an air inlet and a fluid outlet aperture.

7. A centrifugal fiberising spinner unit according to any of the claims 5 or 6, wherein said apertures are provided at the innermost periphery of the chambers.

8. A centrifugal fiberising spinner unit according to any of the preceding claims, wherein the axle comprises
- a drive end where the power is transferred from the drive means to the axle, and
- a non-drive end where the rotor assembly is provided.

9. A centrifugal fiberising spinner unit according to any of the preceding claims, wherein at least one accelerometer is provided detecting radial displacements of the rotary container unit.

10. A centrifugal fiberising spinner unit according to claim 9, wherein a plurality of accelerometers are provided for detection in two mutually orthogonal directions.

11. A centrifugal fiberising spinner unit according to any of the preceding claims, wherein a control unit is provided for receiving detection signals, calculating and selectively supplying one or more chambers with balancing fluid.

12. A method of automatically balancing a centrifugal fiberising spinner unit according to any of the preceding claims, comprising the steps of
- rotating a spinner unit which comprises an axle on which a rotor assembly is mounted on said axle, and provided with a fiberising spinning peripheral surface;
- detecting an unbalance and recording its angular position; and
- balancing the spinner unit by supplying fluid to at least one predetermined fluid camber with an angular position opposite the detected unbalance.

13. A method according to claim 12, whereby the detection includes at least a plurality of accelerometers, preferably at both the drive end and the non-drive end of the rotating axle, and detecting in two mutually orthogonal directions at the non-drive end and preferably also at the drive end of the axle.

14. A method according to claim 12 or 13, whereby the step of balancing comprises a rotary container body having a plurality of chambers, such as four chambers, a rotary flange cover, a rotary collector and a stationary front cover through which balancing fluid may be injected into one or more of the chambers.

15. A method according to any of claims 12 to 14, whereby the step of balancing the spinner unit is performed whilst the spinner unit is rotating at 8,000-18,000 rpm and during use.
